# EUROPEAN PATENT APPLICATION

(11) **EP 2 031 864 A1**
(43) Date of publication of application: **04.03.2009**
(21) Application number: 07742241.8
(22) Date of filing: 24.04.2007
(51) Int. Cl.: H04N 5/232, H04N 5/225, H04N 5/91

(54) **DYNAMIC IMAGE DISPLAY METHOD, DYNAMIC IMAGE DISPLAY SYSTEM, AND WIDE-ANGLE DYNAMIC IMAGE CAPTURING DEVICE**

(30) Priority: 12.05.2006 JP 2006133287
(71) Applicant: Opt Corporation, Chino-shi, Nagano 391-0013 (JP)
(72) Inventor: OGAWA, Tatsuro, Chino-shi, Nagano 391-0013 (JP)
(74) Representative: Schäfer, Matthias W.
(86) International application number: PCT/JP2007/058806
(87) International publication number: WO 2007/132646

(57) **Abstract**

The present invention enables displaying of a video image of a desired subject or a direction without a need for a camera operator to pay a special attention to the desired subject or the direction. The vide displaying method of the present invention comprises a step ST31 for cutting out a portion of a still image imaged by the wide-angle lens 15 and producing a display data for a first display image, a step ST35 for specifying a changed amount of a imaging angle from the imaging timing for the previously cut-out still image to the imaging timing for the still image to be cut-out, a step ST36 for cutting out a second or later still image imaged by the wide-angle lens 15 as well as shifting the cut-out region for the second or later still image so as to cancel the specified change amount of the imaging angle, forming a display data for the second or later display images.

## Description

### [Technical Field]

The present invention relates to a method of displaying a video, a video display system and a wide-angle video imaging device.

### [Technical Background]

The patent document 1 discloses a video recording/playing device that records and plays a video image acquired by a video imaging means as a movie data. The video recording/playing device includes a tremor measuring circuit that measures a degree of tremor of the device during video taking. The degree of tremor measured is recorded onto the supporting recording device together with the video data. During a video playback, the video recording/playing device reads the degree of tremor together with the video data from the recording device and compares the degree of tremor with a predetermined value. If the comparison shows that the degree of tremor exceeds the predetermined value, the video recording/playing device stops displaying the video data, based on the movie data previously read.

[Patent Document 1] Japanese Patent Laid-Open Publication No. 2005-348178 (Refer to the abstract, claims and preferred embodiments.)

### [Disclosure of the Invention]

### [Problem to Be Solved]

During imaging by a video imaging device such as the video recording/playing device of the patent document 1, a camera operator aims the video imaging device at a predetermined angle. The operator must keep fixing the video imaging device so that the predetermined angle during video taking. During the video imaging, the camera operator must keep holding by hand position still in order to hold the device at the predetermined angle. This maneuver puts a significant stress on the camera operator.

In order to avoid this stress, the operator comes to use a tripod stand. The video imaging device is fixed on the tripod stand so as to rotate over it. However, a use of tripod stand increases a load of video equipments and demands a fixed location for talking video on which the tripod stand is set. Furthermore, the video imaging device cannot be fixed onto the tripod stand when taking a video while the operator is moving.

It is an object of the present invention to provide a method of displaying a video, a video display system and a wide-angle video imaging device that enables displaying of a video image of a desired subject or a direction without paying a special attention to the desired subject or the direction.

### [Means to Solve the Problem]

According to the present invention, a method for displaying a video comprises: cutting out a portion of a first still image imaged by a wide-angle lens and producing a display data for a first display image base on the portion of the first still image; specifying a changed amount of a imaging angle from the imaging timing for a previously cut-out still image to the imaging timing for the first still image whose portion is being cut-out, before cutting out a second or later still image imaged by the wide-angle lens; and producing a display data for the second or later display image by cutting out a portion of the second or later still image as well as shifting a cut-out region of the second or later still image from that of the first still image so as to cancel the changed amount in the specified imaging angle.

Adopting the method enables displaying movie to the desired direction based on the first cut-out image during imaging without paying special attention for the desired direction.

According to the invention, the another method for displaying a video comprises: cutting out a portion of a first still image imaged by the wide-angle lens and producing a display data for a first display image capturing a desired subject; specifying a changed amount in a imaging angle from the imaging timing for a previously cut-out still image to the imaging timing for the first still image whose portion is being cut-out, and a changed amount of a relative angle between the imaging position of the previously cut-out still image and the first still image whose portion is being cut-out with respect to the position of the subject, before cutting out a second or later still image imaged by the wide-angle lens; and producing a display data for the second or later display image by cutting out a portion of the second or later still image as well as shifting a cut-out region of the second or later still image from that of the first still image so as to cancel the changed amounts in the specified imaging angle and the relative angle.

Adopting the method enables displaying movie which continuously display a predetermined subject during imaging without paying special attention for the desired subject.

According to the another invention, a video displaying system comprises: a memory means that stores a plurality of saved still image formed with adding angle information specifying an imaging angle or a changed amount of the imaging angle, to each of still image data imaged continuously by the wide-angle lens, a cut-out displayed image producing means that cuts out a portion of the saved still image stored by the memory means in the order of imaging and produces a display data for a plurality of display images, and a display means that displays a plurality of display images in order based on a plurality of display data produced by the cut-out displayed image producing means. The cut-out displayed image producing means cuts out a portion of the still image by shifting a cut-out region of the still image so as to cancel the changed amount of the imaging angles between the still image whose portion is to be cut-out and the previously cut-out still image during cutting out a second or later still image. The changed amount of the imaging angles is specified based on the change in the imaging angles between the saved still image data whose portion is to be cut-out and the previously cut-out saved still image data and angle information indicating the changed amount.

Adopting the configuration enables displaying movie of the predetermined direction based on a first cut-out image imaging without paying special attention for the desired direction.

According to the invention, another video displaying system comprises: angle information that specifies an imaging angle or a changed amount of the imaging angle added to each of plurality of still image data continuously imaged by using a wide angle lens; a memory means that stores a plurality of saved still image data each of which includes the imaged position and imaged position information indicating the amount of a positional change; a cut-out displayed image producing means that cuts out a portion of an image of the saved still image data stored by the memory means in the order and produces a display data for a plurality of display images displaying a predetermined subject; and a display means that displays a plurality of display images in order based on a plurality of display data produced by the cut-out displayed image producing means. The cut-out displayed image producing means cuts out a portion of the still image as well as shifts a cut-out region of the still image so as to cancel a changed amount of imaging angles between the still image data whose portion is to be cut-out and the previously cut-out still image data and a changed amount of a relative angle of the position of imaging the previously cut-out still image and the position of the still image whose portion is to be cut-out with respect to a subject to be imaged, during cutting out a second or later still image. The changed amount of the imaging angles is specified based on angle information indicating the imaging angles and the changed amount, which are added to the saved still image data whose portion is to be cut-out and the previously cut-out saved still image data. The changed amount of the relative angle is specified based on imaged position information indicating the imaged position and the changed amount, which are added to the saved still image data whose portion is to be cut-out and the previously cut-out saved still image data.

Adopting the configuration enables displaying movie which continuously display a predetermined subject during imaging without paying special attention for the desired subject.

According to the present invention, the video displaying system may further comprise: a imaging path display instruction means that instructs the display means to display a screen on which a plurality of imaging positions of the saved still image data stored in the memory means are mapped, and a subject position specifying means that specifies a subject position based on the plurality of imaging positions mapped onto and displayed on the display means. The cut-out displayed image producing means specifies the changed amount of the relative angle with respect to the subject based on the subject position specified by the subject position specifying means.

Adopting the configuration makes it easy to specify a position of the subject and changed amount in a relative angle to the subject by specifying the position of the subject relative to the imaging path mapped on a display.

In addition to the configuration described above, the video displaying system of the present invention may further comprise: a imaging path display instruction means that instructs the display means to display a screen on which imaging positions of a plurality of the saved still image data stored in the memory means are mapped, and a subject position specifying means that specifies the subject position based on the specified positions on the map displayed on the display means. The cut-out displayed image producing means specifies the change amount in the relative angle with respect to the subject based on the subject position specified by the subject position specifying means.

Adopting to the configuration makes it easy specify a position of the subject and a changed amount in a relative angle to the subject by specifying the position of the subject on the map on which the imaging path is mapped.

According to the invention, a wide-angle video imaging device comprises: a wide-angle lens, an imaging means that produces a shot still image data associated with a rectangular image including a circular image imaged by the wide-angle lens, an adding means that produces a saved still image data by adding angle information indicating an imaging angle or a changed amount of the imaging angle to the shot still image data imaged by the imaging means or a compressed still image data compressed based on the shot still image data, and a memory means that stores a plurality of the saved still image data produced by the adding means.

Adopting the configuration makes it possible to obtain a video to the predetermined direction based on the first cut-out image from a video imaged by the wide-angel lens of the wide-angle video imaging device without paying special attention to the desired direction.

In addition to the configuration of the invention described above, the wide-angle video imaging device may further comprise an attitude change detecting means that detects a change in the attitude thereof. The adding means adds the changed amount in the attitude detected by the attitude change detecting means as angle information.

Adopting the configuration makes it possible to produce angle information and add it to the still image data.

According to the invention, another wide-angle video imaging device comprises: a wide-angle lens, an imaging means that produces a shot still image data associated with a rectangular image including a circular image imaged by the wide-angle lens, angle information that indicates an imaging angle or a changed amount of the imaging angle added to an shot still image data imaged by the imaging means or a compressed still image data compressed based on the shot still image data, and an adding means that produces a saved still image data by adding imaged position information indicating an imaged position or an amount of a positional change to the saved still image data, and a memory means that stores a plurality of the saved still image data produced by the adding means.

Adopting the configuration enables continuous displaying of a predetermined subject from a video imaged by the wide-angle lens of the wide-angle video imaging device without paying special attention to the predetermined subject.

In addition to the invention described above, the wide-angle video imaging device may further comprise: an attitude detecting means that detects a change in the attitude thereof, and a position detecting means that detects a position thereof. The adding means may add the change amount of the attitude detected by the attitude change detecting means and the position thereof detected by the position detecting means as angle information and imaged position information.

Adopting the configuration makes it possible to produce and add angle information and imaged position information.

In addition to the invention described above, the another the wide-angle video imaging device wherein, the position detecting means which may receive radio waves such as satellite radio waves, radio waves from cellular phone base stations, airwaves, or wireless communication radio waves and detect an absolute ground position.

Adopting the configuration can makes it easy to specify the subject position and the changed amount of the relative angle of the still image to the subject by displaying imaged position information for each of the still images as an imaged path on a map, specifying the relative subject position to the imaged path and specifying the position of the subject on the map on which an imaging path is displayed.

### [Effect of the Invention]

The present invention can display movie of a desired subject or movie to the desired direction without paying special attention to the desired subject or direction during taking movie.

### [Brief Description of Drawings]

[Fig. 1] Fig. 1 is a perspective view of an ultra -small and wide-angle camera device of a first embodiment of the invention.
[Fig. 2] Fig. 2 is a circuit diagram showing a configuration of the hardware included in the ultra -small and wide-angle camera device of Fig. 1.
[Fig. 3] Fig. 3 is a diagram explaining a configuration of the optical system of the ultra -small and wide-angle camera device of Fig. 1.
[Fig. 4] Fig. 4 is a diagram explaining an example in which an image is formed on the optical receiving surface of a CMOS imaging device.
[Fig. 5] Fig. 5 is a block diagram showing functions realized by the ultra -small and wide-angle camera device of Fig. 1 during a video imaging.
[Fig. 6] Figs. 6 is diagrams showing examples of screen images displayed on the display device with a still image data produced by a displayed image producing unit.
[Fig. 7] Fig. 7 is a flow chart showing a flow of video imaging operation by the ultra -small and wide-angle camera device of Fig. 1.
[Fig. 8] Fig. 8 is a block diagram showing a video display system of a first embodiment of the invention.
[Fig. 9] Fig. 9 is a flow chart showing a flow of display operation of the video display system in Fig. 8 during a playback.
[Fig. 10] Fig. 10 is a flow chart showing processes performed by a displayed image producing unit of the ultra -small and wide-angle camera device in a displaying operation during a playback.
[Fig. 11] Fig. 11 is a diagram explaining a cut-out operation by the displayed image producing unit on the second or later images of a video.
[Fig. 12] Fig. 12 is a block diagram showing a video display system of a second embodiment of the invention.
[Fig. 13] Fig. 13 is a diagram showing an example display of a map on a LCD screen of a personal computer in Fig. 12.
[Fig. 14] Fig. 14 is a flow chart showing a process performed by the displayed image producing unit in Fig. 12 for a display operation during a playback.
[Fig. 15] Fig. 15 is a diagram showing four screens displayable on the large LCD equipped on a personal computer.

### [Reference Numerals]

1 Ultra small and wide-angle camera device (wide-angle video imaging device)
4,4A Video display system
15 Fish-eye lens (wide-angle lens)
17 CMOS imaging device (imaging means)
21 GPS receiver (position detecting means)
22 Gyro sensor (attitude change detecting means)
23 HDD (memory means)
43 JPEG engine (adding means)
44,101 Displayed image producing unit (cut-out displayed image producing means)
51 Shot still image data
54 JPEG data (saved still image data)
72 LCD (display means)
104 PC display control unit (shot image path display means, subject position detecting means)

### [Preferred Embodiments of the Invention]

In the below, a method of displaying a video, a video display system and a wide-angle video imaging device, respectively, of the embodiments of the present invention is explained according to the figures. The wide-angle video imaging device is exemplarily illustrated by an ultra -small and wide-angle camera device. The video display system is exemplarily illustrated by a system comprising an ultra -small and wide-angle camera device and a personal computer, these two units being coupled to each other by an USB cable. The method of displaying a video is a part of the operation by the video display system, and therefore it is explained as such.

### [First Embodiment]

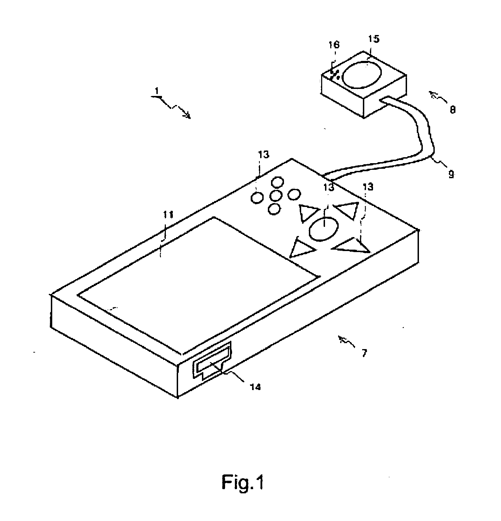

Fig. 1 is a perspective view of an ultra -small and wide-angle camera device 1 of a first embodiment of the invention.

The ultra -small and wide-angle camera device 1 comprises a main unit 7 and a camera unit 8 coupled to the main unit 7 through a signal wire 9. The ultra -small and wide-angle camera device 1 can easily be carried in a pocket. The camera unit 8 may also be coupled to the main unit 7 by wireless coupling, or be a part of the main unit 7.

The main unit 7 has an approximately rectangular, plate-like shape of the simmiler size as a mobile audio playback device. The hard disk drive (HDD) or semiconductor memory of the mobile audio playback device is used for storing a content data.

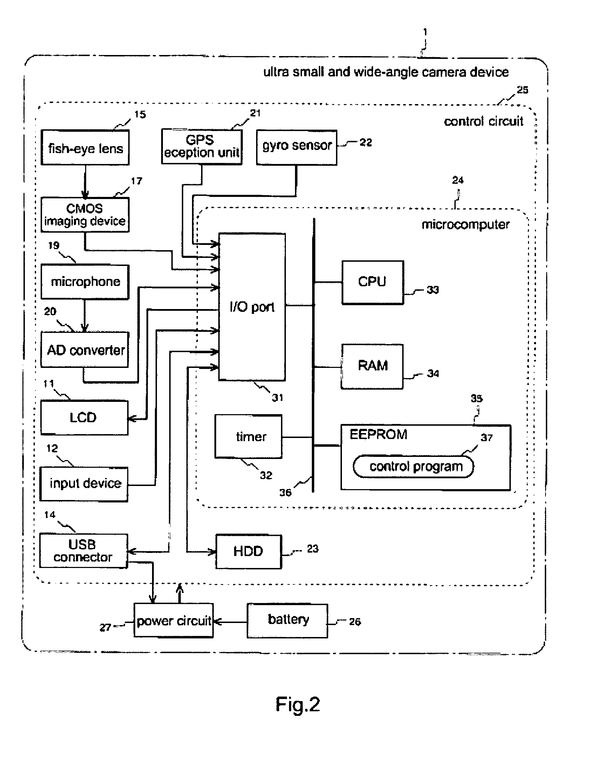

The main unit 7 comprises a liquid crystal display (LCD) device 11 that displays an image for display from a display data, a plurality of operation keys 13 of an input device 12 (refer to Fig. 2) that generates an input data, and an Universal Serial Connector (USB) 14 connected to an USB cable 3 that transmits a signal data. These units are placed on the main unit 7 as to be exposed to the exterior of the main unit 7. On the top surface, shown as the top side in Fig. 1 of the main unit 7, the LCD 11 and a plurality of operation keys 13 are placed next to each other. The USB connector 14 is placed on the lateral surface shown as the lower right part of Fig. 1. An USB cable may be coupled to the USB connector 14. The USB cable comprises a wire for power transmission and a wire for signal transmission. It is preferable using mini B type be used for the USB connector 14, because it's compact.

For example, a camera unit 8 is included in an approximately rectangular housing. A fish-eye lens15 as a wide-angle lens is placed exposed on the top surface of the camera unit 8 shown as the top side in Fig. 1. Moreover, a ventilation hole 16 for a microphone 19 (refer to Fig. 2) is made next to a location where the fish-eyes lens 15 is exposed. The fish-eye lens 15 possesses a planar surface that faces a subject. Hence, it has a smaller protruding surface than that of a regular fish-eye lens 15.

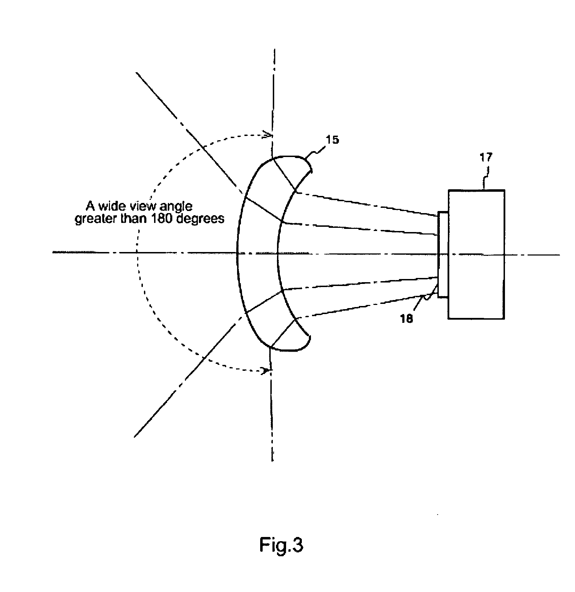

Fig. 2 is a circuit diagram showing a hardware configuration housed in the ultra -small and wide-angle camera device 1 of Fig. 1. The ultra -small and wide-angle camera device 1 comprises a complementary metal oxide semiconductor (CMOS) imaging device 17 as an imaging means. Fig. 3 is a diagram explaining the configuration of an optical system of the ultra -small and wide-angle camera device 1 of Fig. 1. The CMOS imaging device 17 includes an optical receiving surface 18 of which an aspect ratio is 4:3 (horizontal: vertical). Alternatively, the aspect ratio of the optical receiving surface 18 may be 9:4. A plurality of photo receiving elements (not shown), which correspond to a plurality of pixels that forms a still image, are placed in a grid-like manner on the optical receiving surface 18 of the CMOS imaging device 17. For instance, a plurality of photo receiving elements counting three million pixels are placed on the optical receiving surface 18.

Fig. 3 is a diagram explaining the configuration of optical system of the ultra -small and wide-angle camera device 1 of Fig. 1. As shown in Fig. 3, the fish-eye lens 15 is placed approximately at a location along the axis orthogonal to the optical receiving surface 18 of the CMOS imaging device 17. The fish-eye lens 15 has a wide-angle angle greater than or equal to 180 degrees (e.g. approximately 200 degrees). Light from the subject concentrated by the fish-eye lens 15 is imaged on the optical receiving surface 18 of the CMOS image device 17.

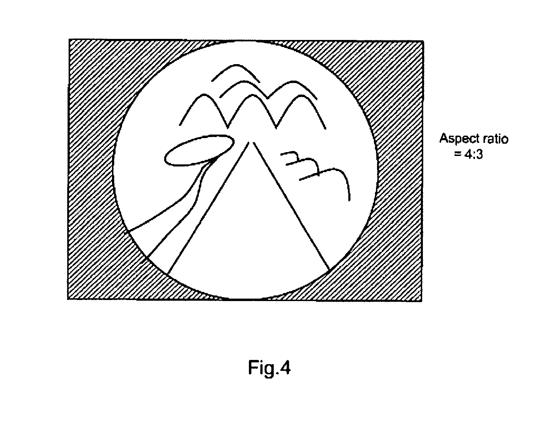

Fig. 4 is a diagram explaining an example in which an image is formed on the optical receiving surface 18 of the CMOS imaging device 17. As shown in Fig. 4, light concentrated by the fish-eye lens 15 is projected on a central region of the optical receiving surface 18. This concentrated light forms a circular image, which possesses a circular boundary, at the central region of the optical receiving surface 18. The circular image is an image of the subject that passes through the fish-eye lens 15. An image close to the boundary of the circular image is more distorted than that close to the central region of the circular image.

Furthermore, in the circumferential region surrounding and excluded from the region of the circular image (diagonally striped region in Fig. 4) on the optical receiving surface 18, a subtle shading irregularity due to light leaking from the camera unit 8 or due to light rounded by diffraction exist or the like. Consequently, the amount of light received in the circumferential region is not zero, and therefore, pixels of the circumferential region are not of an evenly black color.

The CMOS imaging device 17 periodically reads the amount of light incident on a plurality of photo receiving elements on the optical receiving surface 18 and generates a brilliance distribution data of a rectangular image of the same aspect ratio as that of the optical receiving surface 18. This brilliance distribution data of the rectangular image includes a brilliance distribution data of the circular image.

Charge Coupled Device (CCD) may be used in place of the CMOS imaging device 17. The CMOS imaging device 17 reads the amount of light incident on the plurality of photo receiving elements by every line from the optical receiving surface 18. On the other hand, CCD reads the amount of light incident on each photo receiving element individually. Therefore, it takes a longer period from time when CCD starts photo receiving till time when it completes producing a brilliance distribution data compared to than that of CMOS imaging device 17. Consequently, in order to generate the brilliance distribution data repetitively in a given interval of time for video taking, the CMOS imaging device 17 has an advantage if there is a large number of photo receiving elements.

The ultra -small and wide-angle camera device 1 further comprises a microphone 19, an AD converter 20, a Global Positioning System (GPS) receiver 21 that exemplarily illustrates a position detecting unit, a gyro sensor 22 that exemplarily illustrates an attitude change detecting unit, HDD 23 that exemplarily illustrate a memory unit that stores various types of data, and a microcomputer 24. In order to supply a power to a control circuit 25, the ultra -small and wide-angle camera device 1 comprises a battery 26 and a power circuit 27. Furthermore, of the elements constituting the circuit, the fish-eye lens 15, the CMOS imaging device 17, the microphone 19 and the gyro sensor 22 may be placed in the camera unit 8 and other constituting elements of circuit may be placed in the main unit 7.

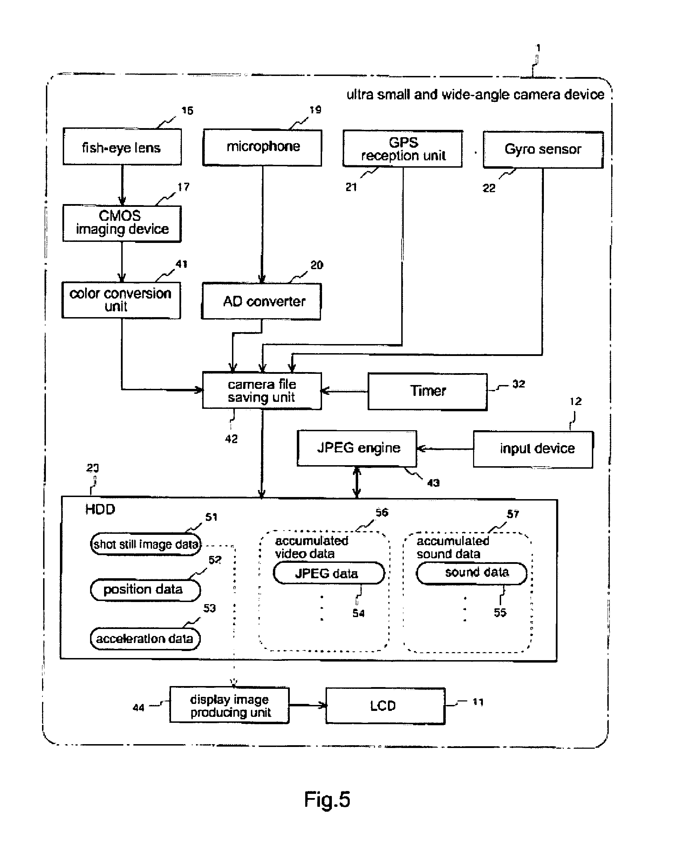

The microphone 19 picks up a sound surrounding the ultra -small and wide-angle camera device 1.The microphone 19 generates a sound signal such as a voice. The waveform of the sound signal changes according to the type of sound the microphone 19 picks up. The AD converter 20 samples the sound signal and produces a sound data 55 (refer to Fig. 5.)

The GPS receiver 21 receives radio waves from a GPS satellite on the satellite orbit around the earth. The radio wave from the GPS satellite includes such information as the wave emission time and the satellite's position information. The GPS receiver 21 receives a radio wave from a plurality of GPS satellites and periodically produces a position data (refer to Fig. 5) 52 of the GPS receiver 21. The GPS receiver 21 is located in the ultra -small and wide-angle camera device 1. Consequently, the position data 52 of the GPS receiver 21 is also the position data 52 of the ultra -small and wide-angle camera device 1.

The gyro sensor 22 is placed in the camera unit 8. The gyro sensor 22 measures an acceleration of an attitude change of the camera unit 8 position as it moves or rotates. For instance, the gyro sensor 22 measures acceleration along the up-down axis relative to the paper in Fig. 3 and along the orthogonal axis relative to the paper in Fig. 3. In other words, the gyro sensor 22 measures acceleration along two directions that are orthogonal to the optical receiving surface 18. The gyro sensor 22 periodically generates an acceleration data 53 (refer to Fig. 5) including measured acceleration values.

The battery 26 stores an electric power. The power circuit 27 takes a power provided from the battery 26 or a power wire of the USB cable 3 and supplies this power as D/C power to each constitutive elements of the ultra -small and wide-angle camera device 1.

The microcomputer 24 comprises an input/output (I/O) port 31, a timer 32, a central processing unit (CPU) 33, a random access memory (RAM) 34, an electronically erasable and programmable read only memory (EEPROM) 35, and a system bus 36 that couples these units or the like.

Furthermore, the ultra -small and wide-angle camera device 1 of the first embodiment includes a single microcomputer.
Alternatively, the ultra -small and wide-angle camera device 1 may include a plurality of microcomputers. More specifically, the ultra -small and wide-angle camera device 1 may comprise a custom integrated circuit (IC) that performs color conversion, a digital signal processor (DSP) that produces displayed still image data, and application specific IC (ASIC) that performs other processes.

Surrounding devices such as the CMOS imaging device 17, an AD converter 20, a LCD 11, an input device 12, the USB connector 14, the GPS receiver 21, the gyro sensor 22 and HDD 23 are coupled to the I/O port 31 of the microcomputer 24 Through the system bus 36, the I/O port 31 provides data that comes from the CPU 33 to the surrounding devices , and conversely provides data that comes from the surrounding devices to the CPU 33.

The timer 32 measures time. The kind of time information measured by the timer 32 includes an absolute time such as a clock time, or an amount of time elapsed since a predetermined time.

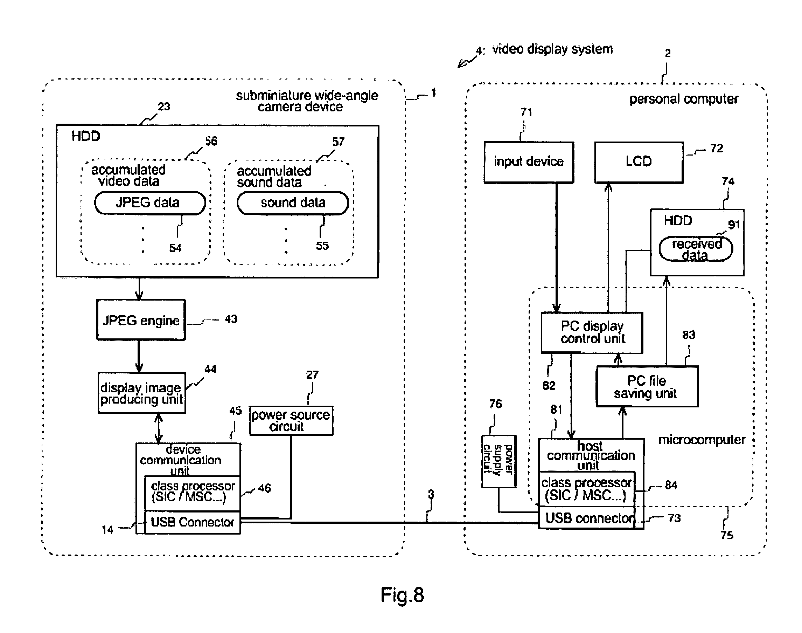

The EEPROM 35 stores a control program 37 that controls the ultra -small and wide-angle camera device 1. The CPU loads the control program 37 stored in the EEPROM 35 into RAM 37and executes it. Accordingly, as shown in Fig. 5, during the video taking, the following units are realized in the microcomputer 24: a color conversion unit 41, a camera file saving unit 42, a JPEG engine 43 as a adding means, and a displayed image producing unit 44 as a cut-out displayed image producing means. Fig. 5 is a block diagram showing functions realized in the ultra -small and wide-angle camera device 1 during video taking. Furthermore, as shown in Fig. 8, during video displaying mentioned below, the following units are realized in the microcomputer: a JPEG engine 43, the displayed image producing unit 44, and a device communication unit 45.

The color conversion unit 41 produces a shot still image data 51 from the brilliance distribution data. The color conversion unit 41 takes the brilliance data associated with pixels included inside a predetermined circular region in the image from the brilliance distribution data and converts it to a corresponding color data. Then, the color conversion unit 41 assigns a single predetermined color (such as black) to those pixels that are outside of the predetermined circular region. Furthermore, the predetermined circular region may coincide with the circular image from the brilliance distribution data, or it may be slightly larger or smaller than the circular image.

The JPEG engine 43 compresses the shot still image data 51 by the JPEG algorithm and produces a compressed still image data. The JPEG compression algorithm applies a discrete cosine transform and quantization to each block of the image to be compressed including predetermined number of pixels (e.g. X pixels), obtaining the image's a spatial frequency component per block. The spatial frequency component per block of the image comprises a DC (constant) component per block and a plurality of AC (oscillatory) components per block. Next, the JPEG compression algorithm applies entropy coding to each frequency component of the image to reduce the data size. Moreover, in entropy coding, the constant component of an image is encoded by a predictive coding scheme such as Huffman coding, and the each of the oscillatory components is encoded by an arithmetic coding scheme such as run length coding. Furthermore, the JPEG engine 43 adds a header to the compressed still image data to form a JPEG data 54.

Moreover, the JPEG engine 43 may execute the above compression algorithm in reverse order and elongation process. When JPEG engine 43 executes the above compression algorithm in reverse, it is possible to obtain the elongated still image data from the compressed still image data (JPEG data 54) compressed by the JPEG compression algorithm. The image quality of the elongated still image data is the same quality or approximately the same of the shot still image data 51.

The camera file saving unit 42 saves the shot still image data 51 produced by the color conversion unit 41, the compressed still image data (JPEG data 54) produced by the JPEG engine 43, and the elongated still image data onto HDD 23.

The displayed image producing unit 44 obtains an uncompressed still image data (such as the shot still image data 51 and the elongated still image data) from HDD 23 and produces a displayed still image data for displaying in a display device such as the LCD 11 based on the obtained still image data. The displayed image producing unit 44 produces a displayed still image data of the image, which has the same resolution of the display device that displays the displayed still image data, based on the still image data of various pixel numbers. Furthermore, the displayed image producing unit 44 may produce a displayed still image data which is displayed on a part of the display device based on the still image data of pixel numbers.

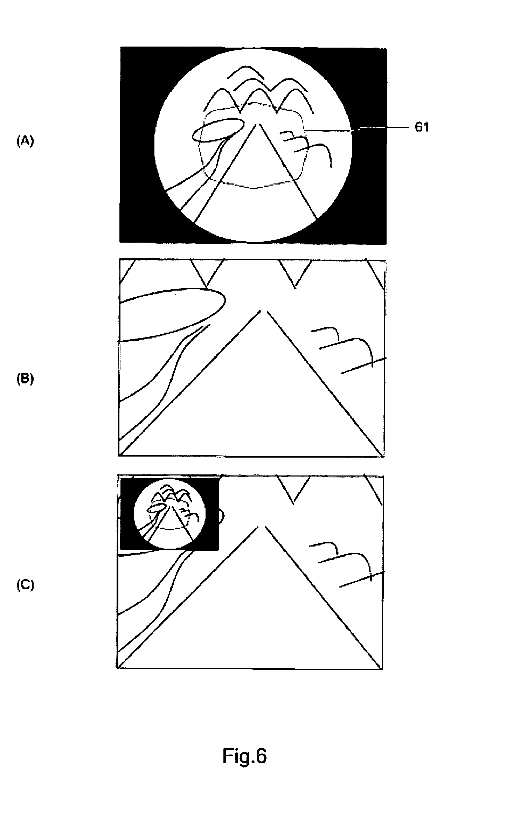

Figs. 6 is diagrams showing an example of a display screen of the display device displaying a displayed still image data produced by the displayed image producing unit 44. Fig. 6 (A) shows a wide-angle screen displaying an image for the shot still image data 51 taken by the ultra -small and wide-angle camera device 1. Fig. 6 (B) shows an example of a screen image that is cut-out from the solid line region at the center of the Fig. 6 (A) and elongated it. In the below, the solid line region in Fig. 6 (A) is called a cut-out ring 61. Fig. 6 (C) is an example of a double screen in which a wide-angle screen is assigned to the upper and left corner of the cut-out screen of Fig. 6(B). The wide-angle screen is reduced by thinning some pixels. The displayed image producing unit 44 produces the displayed still image data which is displayed on the respective screen.

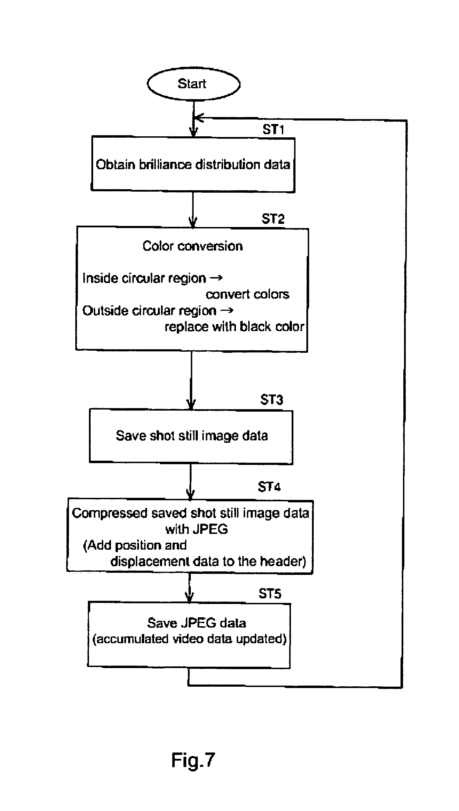

Fig. 7 is a flow chart showing the video taking operation by the ultra -small and wide-angle camera device of Fig. 1. When taking a video by ultra -small and wide-angle camera device, the camera unit 8 is fixed facing front on top of the dashboard of a car. The main unit 7 is stored in the car's glove compartment. The camera unit 8 may also be placed on a person's forehead and the main unit 7 may be placed inside a chest pocket or on a belt.

When the operation key 13 of the main unit 7 is manipulated, the input device 12 generates an input data indicating to start a video recording, beginning operation of each of the units such as the color conversion unit 41, the camera file saving unit 42, the JPEG engine 43 and the displayed image producing unit 44.

The color conversion unit 41 obtains a brilliance distribution data from the CMOS imaging device 17 (Step ST1.) The color conversion unit 41 converts a brilliance data associated with the pixels inside a predetermined circular region of the image regarding the obtained luminance distribution data into corresponding color data. Then, the color conversion unit 41 assigns a single predetermined color to the pixels lying outside of the predetermined circular region. Thereby, the shot still image data 51 is produced (Step ST2.) The color conversion unit 41 provides the generated shot still image data 51 to the camera file saving unit 42.

Other than the shot still image data 51, data such as a sound data 55 from the AD converter 20, a position data 52 from the GPS receiver 21, and an acceleration data 53 from the gyro sensor 22 are provided to the camera file saving unit 42. The camera file saving unit 42 saves these data as raw data onto HDD 23 (Step ST3.)

Once a new shot still image data 51 is saved onto HDD 23, the JPEG engine 43 begins to compress the new shot still image data 51 based on a notification from the camera file saving unit 42. The JPEG engine 43 compresses the shot still image data 51 by JPEG algorithm and produces the JPEG data 54 (Step ST4.)

Furthermore, the JPEG engine 43 executes an integration of the acceleration data 53 stored in HDD 23 over the time interval between the previous shooting timing of the shot still image data 51 and the current shooting timing of the shot still image data 51, and thereby calculates the amount of the displacement of the optical receiving surface 18 during this time interval into two directions which are perpendicular to the optical receiving surface 18. The JPEG engine 43 adds the data of the displacement to two directions to the JPEG data 54 as a header. Furthermore, the JPEG engine 43 adds the updated position data 52 saved in HDD 23 to the JPEG data 54 added as a header data. The JPEG engine 43 saves the JPEG data 54, to which the updated position data 52 and the displacement data are added, onto HDD 23.

The CMOS imaging device 17 produces a brilliance distribution data every periodic predetermined imaging interval. The ultra -small and wide-angle camera device 1 executes an imaging operation shown in Fig. 7 each time the brilliance distribution data is produced. Consequently, the JPEG data 54, which is based on the brilliance distribution data produced by the CMOS imaging device 17, are accumulated into the HDD 23 of the ultra -small and wide-angle camera device 1. Thus, an accumulated video data 56 comprising a plurality of JPEG data 54 is produced and saved onto the HDD 23 of the ultra -small and wide-angle camera device 1. The accumulated video data 56 is updated every time the JPEG engine 43 produces a new JPEG data 54 and this data is added to the accumulated video data 56 in HDD 23. Furthermore, as the sound data 55 accumulates in the HDD 23, the accumulated sound data 57 is produced.

Moreover, apart from the process shown in Fig. 7, the displayed image producing unit 44 obtains the shot still image data 51 from the HDD 23 during imaging. From the shot still image data, the displayed image producing unit 44 produces a displayed still image data to be displayed on the LCD 11 of the ultra -small and wide-angle camera device 1. The displayed image producing unit 44 converts the resolution of the still image, for example, in order to produce a displayed still image data so as to display a wide-angle screen including the whole circular image on the LCD 11 of the ultra -small and wide-angle camera device 1. The displayed image producing unit 44 provides the produced and displayed still image data to the LCD 11 of the ultra -small and wide-angle camera device 1. The LCD 11 of the ultra -small and wide-angle camera device 1 displays an image of the provided displayed still image data. Accordingly, a user of the ultra -small and wide-angle camera device 1 can check whether or not the camera angle of the camera unit 8 at the beginning of video taking is equal to a predetermined angle.

As the result of performing the above imaging operation, as shown in Fig. 5, raw data such as the shot still image data 51, the accumulated video data 56 comprising a plurality of JPEG data 54, and the accumulated sound data comprising a plurality of sound data 55 are saved in the HDD 23 of the ultra -small and wide-angle camera device 1.

Fig. 8 is a block diagram showing the video display system 4 of the first embodiment of the present invention. The video display system 4 comprises an ultra -small and wide-angle camera device 1 of Fig. 1 and a personal computer 2. In the video display system 4, the ultra -small and wide-angle camera device 1 and a personal computer 2 are coupled to each other by an USB cable 3.

When the ultra -small and wide-angle camera device 1 is coupled to the personal computer 2 by the USB cable 3, the ultra -small and wide-angle camera device 1 becomes a video display mode. Consequently, the units such as the JPEG engine 43, the displayed image producing unit 44 and a device communication unit 45 are realized inside the ultra -small and wide-angle camera device 1. The JPEG engine 43 and the displayed image producing unit 44 are the same as those of Fig. 5 during imaging.

The device communication unit 45 executes data communication through an USB connector 14 according to the USB standard. The device communication unit 45 transmits and receives communication data to and from a host communication unit 81 (described below) of the personal computer 2. The device communication unit 45 includes a class processing unit 46 such as a still image class (SIC) and a mass storage class (MSC). The class processing unit 46 includes various communication buffers such as end points that correspond to classes. The device communication unit 45 records communication data into the communication buffer, and the class processing unit 46 transmits the communication data to the host communication unit 81. Moreover, the class processing unit 46 receives a communication data from the host communication unit 81, records the received communication data to the communication buffer, and then notifies it to the device communication unit 45.

The personal computer 2 comprises an input device 71 such as a keyboard or a pointing device, a large LCD 72 as a displaying unit, an USB connector 73, a HDD 74, and a microcomputer 75. These surrounding devices such as the input device 71, the large LCD 72, the USB 73 and the HDD 74 are coupled to an I/O port (not shown) of the microcomputer 75. The CPU (not shown) of the microcomputer 75 loads a client program (not shown) stored in the HDD 74 into RAM (not shown) in order to execute it. Consequently, as shown in Fig. 8, the units such as a host communication unit 81, a PC display control unit 82 and a PC file saving unit 83 are realized inside the microcomputer 75. A power supply circuit 76 is coupled to the power wire of the USB connector 73. The power supply circuit 76 supplies a power to the power source circuit 27 of the ultra -small and wide-angle camera device 1.

The host communication unit 81 transmits and receives a communication data to and from the device communication unit 45 by the USB connector 73. The host communication unit 81 comprises a class processing unit 84 such as SIC, MSC or the like.

The PC data saving unit 83 saves various communication data such as a displayed still image data received by the host communication device 81 as a received data 91 onto the HDD 74 of the personal computer 2.

The PC display control unit 82 provides the large LCD 72 with the displayed still image data stored in the HDD 74 of the personal computer 2. Accordingly, an image regarding the displayed still image data is displayed on the LCD 72 of the personal computer.

The control program 37 stored in the EEPROM 35 of the microcomputer 24 in the ultra -small and wide-angle camera device and a client program (not shown) stored in the HDD 74 of the personal computer 2 may be pre-installed before shipment on their respective memory devices (EEPROM 35 or HDD 74), or be installed after shipment on their respective memory devices. The program or data installed after shipment may be stored in a recording medium such as a CD-ROM (not shown) that can be read by a computer, or be obtained through a communication medium such as the internet (not shown).

Alternatively, a part of the control program 37 or the client program can be installed after shipment onto their respective memory devices (EEPROM 35 or HDD 74.) The client program stored in the HDD 74 of the personal computer 2 may be stored as a combination of an operating system and an application program. Alternatively, the client program may be stored as a combination of an operating system, a browser program, and plug-in programs operating as parts of the browser program. The browser program or plug-in programs together with the operating system may be installed onto the personal computer 2 after its shipment in order to realize a client program inside the personal computer 2.

Next, the operation of the video display system 4 having the above constitution is explained.

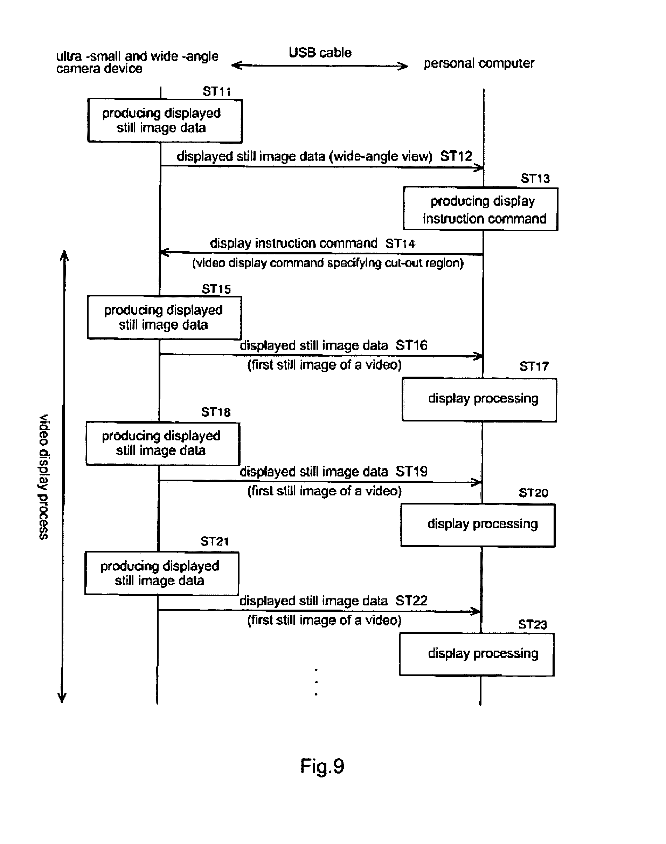

Fig. 9 is a flow chart showing a sequence of display operations that are part of a playback by the video display system 4 of Fig.8.

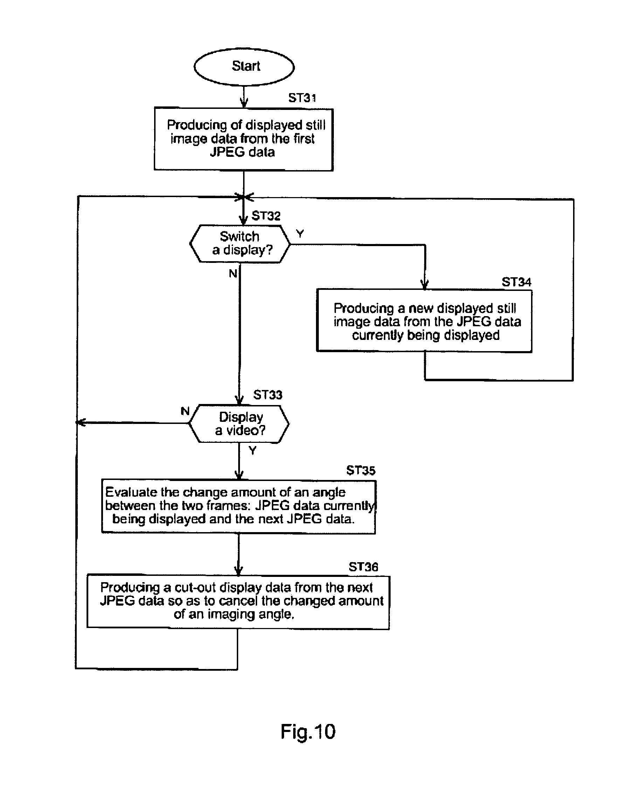

Fig. 10 is a flow chart showing a sequence of processes executed by the displayed image producing unit 44 of the ultra -small and wide-angle camera device 1 in the display operation during a playback.

When the ultra -small and wide-angle camera device 1 is coupled to the personal computer 2 by the USB cable 3, the JPEG engine 43 of the ultra -small and wide-angle camera device 1 reads a first JPEG data 54 of the accumulated video data 56 stored in the HDD 23. The JPEG engine 43 elongates the JPEG data 54 and produces an elongated still image data. The elongated still image data is formed by a plurality of pixel data each of which corresponds to one pixel of the image similar to the shot still image data 51. The JPEG engine 43 saves the produced elongated still image data onto the HDD 23.

As the first elongated still image data is produced by the JPEG engine 43, the displayed image producing unit 44 of the ultra -small and wide-angle camera device 1 initiates producing the first displayed still image data as shown in Fig. 10 (Step ST31.) The displayed image producing unit 44 reads the first elongated still image data from the HDD 23 and produces a displayed still image data to be displayed onto the display device from the read still image data. The displayed image producing unit 44 produces the displayed still image data to be displayed onto the wide-angle screen of Fig. 6 (A) (Step ST11 in Fig. 9.) The displayed image producing unit 44 provides the device communication unit 45 with the displayed still image data to be displayed onto the wide-angle screen.

When the device communication unit 45 of the ultra -small and wide-angle camera device 1 receives the displayed still image data, the device communication unit 45 sends it to the host communication unit 81 of the personal computer 2 (Step 12 in Fig. 9.) More specifically, the device communication unit 45 stores the displayed still image data in the communication buffer, which is produced by the class processing unit 46, then transmits the displayed still image data to the host communication unit 81. The displayed still image data is transmitted from the communication buffer of the device communication unit 45 through the USB connector 14 of the device communication unit 45, the USB cable 3, and the USB connector 73 of the host communication unit 81, to the communication buffer of the host communication unit 81. The host communication unit 81 takes the displayed still image data received by the communication buffer and provides it to the PC file saving unit 83. By the above processes, the displayed still image data produced by the displayed image producing unit 44 to be displayed on the wide-angle screen is transmitted to the PC file saving unit 83 of the personal computer 2.

The PC file saving unit 83 of the personal computer 2 receives the displayed still image data from the displayed image producing unit 44 and saves it onto the HDD 74 of the personal computer 2 in the form of the received data 91. Accordingly, the displayed still image data corresponding to the first JPEG data 54 of the accumulated video data 56. is saved in the HDD 74 of the personal computer 2.

Once the displayed still image data is saved onto the HDD 74 of the personal computer 2 as the received data 91, the PC display control unit 82 reads the displayed still image data from the HDD 74 of the personal computer 2 and provides it as a display data to the large LCD 72 of the personal computer 2. Consequently, an image corresponding to the display instruction command produced by the PC display control unit 82 is displayed on the large LCD 72 of the personal computer 2. The large LCD 72 of the personal computer 2 displays a wide-angle screen in which the circumferential region surrounding the circular image is filled in with black color as shown in Fig. 6 (A).

In the display operation, the displayed image producing unit 44 repetitively performs the processes shown in Fig. 10. After producing the displayed still image data for the first wide-angle screen (Step ST31), the displayed image producing unit 44 receives the display instruction command for display switching (Step ST 32) and turns into a waiting state in which it waits for the video display period to elapse (Step ST33.)

On the other hand, the PC display control unit 82 of the personal computer 2 adjusts the position and size of the cut-out ring 61 on the wide-angle screen based on input data. The input data are generated by the input device 71 manipulated by a user of the video display system 4. For instance, a user may position the cut-out ring 61 to the center of the wide-angle screen as shown in Fig. 6 (A). Based on the input data from the input device 71, the PC display control unit 82 generates a display instruction command by which the region circumscribed by the cut-out ring 61 is cut out from the image and displayed as a movie(step ST13 in Fig.9).

The PC display control unit 82 provides the produced display instruction command to the host communication unit 81. The host communication unit 81 transmits the provided display instruction command to the device communication unit 45 through the USB connector 73 of the personal computer 2, the USB cable 3 and the USB connector 14 of the subminiature wide-angel camera device 1 (Step ST14 in Fig. 9.)

The device communication unit 45 provides the received display instruction command to the displayed image producing unit 44. When the display instruction command, by which the central image of the wide-angle screen is cut out and displayed as a movie, is provided, the displayed image producing unit 44 specifies that a display change instruction has been given at the step ST 32 in Fig. 10. Then, the displayed image producing unit 44 produces a new displayed still image data based on the currently being displayed JPEG data 54 according to the display change instruction of the provided command.

More specifically, the displayed image producing unit 44 reads an elongated still image data from the HDD 23, cuts out the region, whose size and position is specified by the cut-out ring 61, from the image in the elongated still image data being read, and performs a contour correction or a distortion correction (such as a correction of distortion aberration) on the image so that a contour of the cut-out image is set to be rectangular image of a predetermined aspect ratio and resolution. The displayed image producing unit 44 elongates the cut-out image in an expansion ratio corresponding to the predetermined display size of the large LCD 72 of the personal computer 2, and then produces the cut-out displayed still image data from the elongated cut-out image.

The displayed image producing unit 44 instructs the device communication unit 45 to transmit the produced cut-out displayed still image data (Step ST 16 in Fig. 9.) Accordingly, the cut-out displayed still image data is saved on the HDD 74 of the personal computer 2. Furthermore, the PC display control unit 82 of the personal computer 2 instructs the LCD 72 of the personal computer 2 to display the image of the displayed still image data (Step ST17. in Fig.9) Consequently, the image whose region is specified by a user according to the cut-out ring 61 is displayed in an elongated form on the LCD 72 of the personal computer 2. The LCD 72 of the personal computer 2 is displayed a cut-out screen as shown in Fig. 6 (B).

Furthermore, after receiving a video display instruction by the above display instruction command or the like(Yes at step ST33 of Fig. 10), the displayed image producing unit 44 produces the displayed still image data of the cut-out image associated with the second or later JPEG data 54 of the accumulated video data 56 (steps ST35 and ST36 in Fig.10, and steps ST18 and ST21 in Fig.9.)

More specifically, the JPEG engine 43 reads the JPEG data 54 coming after JPEG data 54that was previously elongated, in the order of imaging from the accumulated video data 56 stored in the HDD 23. The JPEG engine 43 elongates the read JPEG data 54 in order to produce the elongated still image data.

Once the elongated still image data is produced by the JPEG engine 43, the displayed image producing unit 44 reads the header data of the elongated JPEG data 54 from the HDD 23 to obtain the displacement data. Based on the displacement data, the displayed image producing unit 44 specifies the changed amount in the camera angle from the time of imaging the JPEG data 54 that is cut-out previously to the time of the imaging the newly cut-out JPEG data 54 (step ST 35 in Fig. 10.)

After specifying the changed amount in the camera angle, the displayed image producing unit 44 cuts out the image included in the cut-out ring 61 from the image in the elongated JPEG data 54, process the contour correction and distortion correction on the image and produces a displayed still image data of the cut-out screen (step ST36 of Fig. 10.) Furthermore, at this time, the displayed image producing unit 44 displaces the position of the cut-out ring 61 toward the direction that cancels the changed amount of the camera angle, and by the same distance as the changed amount of the camera angle, then cuts out the image inside the cut-out ring 61.

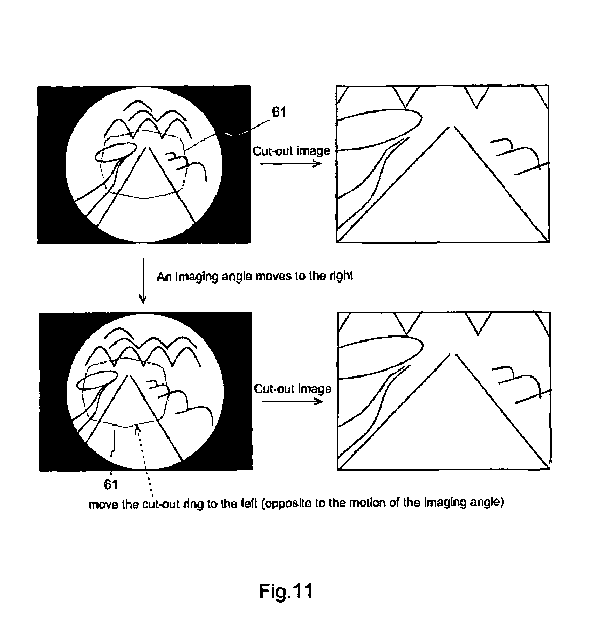

Fig. 11 is a diagram explaining the cut-out processes by the displayed image producing unit 44 of the video image later than the second image. The upper left image of Fig. 11 is a wide-angle image of the first JPEG data 54. The upper right image of Fig. 11 is a cut-out image cut out from the still image in the first JPEG data 54 shown in the upper left. The lower left image of Fig. 11 is a wide-angle image of the second JPEG data 54. The lower right image of Fig. 11 is a cut-out image cut-out from the still image in the second JPEG data 54 shown in the lower left.

As shown in the two wide-angle images on the left side of Fig. 11, once the camera angle shifts from that shown in the upper left figure towards the right, the subject inside the circular image shifts to the left, as shown by the wide-angle image in the lower left figure. In the JPEG data 54 of the second wide-angle image, the displacement data is stored as the changed amount in the camera angle in the direction opposite to the shifting of the subject.

As shown in the wide-angle image on the lower left side of Fig. 11, the displayed image producing unit 44 shifts the position of the cut-out ring 61 so as to cancel the changed amount in the camera angle specified by the displacement data. More specifically, the displayed image producing unit 44 shifts the position of the cut-out ring 61 to the left so as to cancel the changed amount in the camera angle specified by the displacement data. Then, the displayed image producing unit 44 cuts out an image within the cut-out ring 61 located at the position for canceling. Accordingly, the subject inside the cut-out image in the consecutive images does not shift much. As clear from comparing the cut-out image on the upper right side of the Fig. 11 with that on the lower right side, the movement of the subject inside the cut-out image due to the change in camera angle is cancel in the consecutive cut-cut out image and therefore the subject is not moved.

After producing the displayed still image data of the new cut-out screen from the second or later video images, the displayed image producing unit 44 transmits the produced displayed still image data to the device communication unit 45 (steps ST19 and ST 22 in Fig. 9.) Accordingly, the displayed still image data for the newly cut-out screen of the second or later video images are saved onto the HDD 74 of the personal computer 2 as the received data 91. Moreover, the PC display control unit 82 of the personal computer 2 instructs the LCD 72 of the personal computer 2 to display the image of the new displayed still image data for the second or later video images (step ST20, ST23 in Fig. 9.) Consequently, on the LCD 72 of the personal computer 2, a video image is displayed as an elongated image of the region specified by a user with the cut-out ring 61.

As explained above, in the ultra -small and wide-angle camera device 1 of the first embodiment, the CMOS imaging device 17 generates the shot still image data 51 whose rectangular still image includes a circular image shot by the fish-eye lens 15. The JPEG engine 43 adds angle information detected by the gyro sensor 22 (information related to the amount of camera angle change,) to the compressed still image data, which is obtained by compressing the shot still image data 51 shot by the CMOS imaging device 17. With such an addition of the data, the JPEG engine 43 produces the JPEG data 54. The HDD 23 stores the JPEG data 54.

Moreover, in the video display system 4, which is constituted by coupling the ultra -small and wide-angle camera device 1 with the personal computer 2 by the USB cable 3, the displayed image producing unit 44 of the ultra-small and wide-angle camera device 1 cuts out a part of the image of the JPEG data 54 stored in the HDD 23 in the order of imaging and produces the displayed still image data for a plurality of cut-out still images. The LCD 72 of the personal computer 2 displays, in order, the plurality of cut-out still images from the plurality of displayed still image data produced by the displayed image producing unit 44.

In particular, in the cut-out process for the second or later still images, the displayed image producing unit 44 of the ultra -small and wide-angle camera device 1 specifies the changed amount of the imaging angle from that of the previously cut-out still image based on the angle information added in the JPEG data 54, and cuts out a part of the still image with shifting the cut out range of the image so as to cancel the changed amount of the imaging angle.

Consequently, in the first embodiment, the video display system 4 is able to display a reproduced video image of a desired direction based on the first cut-out image without paying a special attention to the desired direction.

Furthermore, if a command that changes the view direction is given during the cut-out process of a video image for example, the displayed image producing unit 44 stops video playback and changes the screen. After this event, if the user requests a video playback, the displayed image producing unit 44 starts the video playback with the camera angle that the camera takes after the screen change. Accordingly, the user is able to play the video and the still image seamlessly. During the playback, the video screen can be changed to the fixed direction at the fixed position.

### [Second Embodiment]

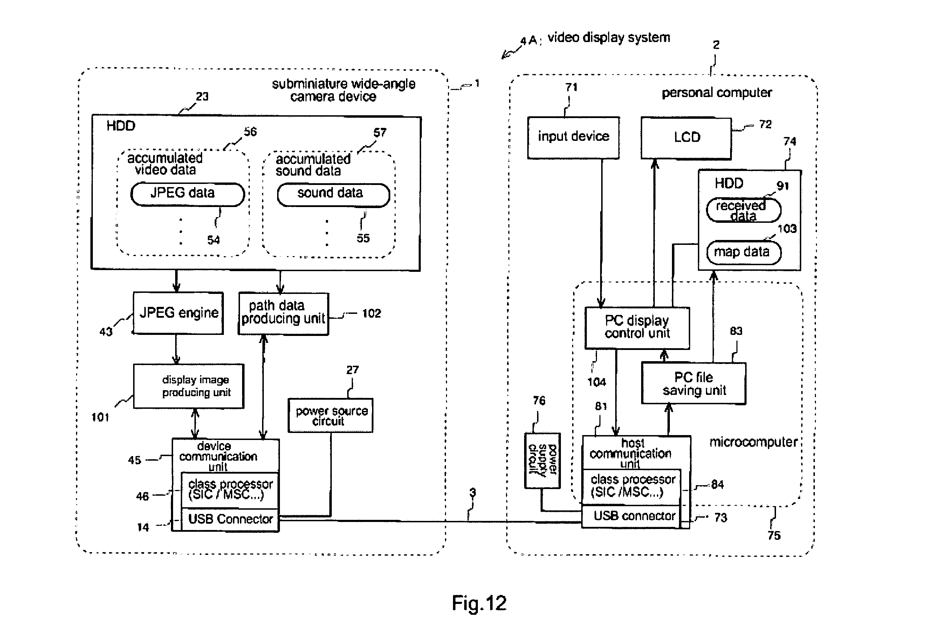

Fig. 12 is a block diagram showing a second embodiment of the present invention related to a video display system 4A. An ultra -small and wide-angle camera device 1 of the video display system 4A comprises a displayed image producing unit 101 exemplarily illustrating a cut-out displayed image producing unit and a path data producing unit 102. Moreover, a personal computer 2 of the video display system 4A includes a map data 103 that is stored in HDD74, an imaging path display unit and a PC display control unit 104 exemplarily illustrating a subject position detecting means.

The displayed image producing unit 101 receives uncompressed still image data ( the shot still image data 51, the elongated still image data, and the like ), and produces a still image data to display on display device such as LCD72 based on the received still image data. When producing a displayed still image data to be displayed on a cut-out screen, the displayed image producing unit 101 shifts the cut-out region based on cut-out ring in such a way as to cancel the changed amount of the relative angle of the imaging position with respect to the subject as well as the changed amount of the imaged angle.

The path data producing unit 102 loads a plurality of position data 52 from the headers of a plurality of JPEG data 54 stored in HDD23 as an accumulated video data 56. The path data producing unit 102 produces path data based on a plurality of position data 52.

A map data 103 comprises a display map data showing predetermined regional road and the like, and latitude/longitude data of each point on the map.

The PC display control unit 104 controls the LCD 72 of the personal computer 2 to display an imaging display screen showing the still image data produced by the display image producing unit 101, and a map display screen displaying the display map data of the map data 103. Note that the image display screen and the map display screen can either be displayed on a split-screen, or on separate screens.

The constitutive elements of the video display image 4A of the second embodiment other than those mentioned above have the same function as those of the first embodiment; hence, the explanation is omitted by referring to them by the same reference numerals.

Next, the operation of the video display system 4A having the above constitution is explained.

When the ultra -small and wide-angle camera device 1 couples to the personal computer 2 via the USB cable 3, the PC display control unit 104 of the personal computer 2 produces a transmission request for imaging path data, and sends it to the host communication unit 81.

The host communication unit 81 of the personal computer 2 sends the transmission request for imaging path data to device communication unit 45 of the ultra -small and wide-angle camera device 1. More specifically, the transmission request for imaging path data is sent to the device communication unit 45 via the USB connector 73 of the personal computer 2, the USB cable 3 and the USB connector 14 of the ultra -small and wide-angle camera device 1.

The device communication unit 45 sends the received transmission request for imaging path data to the path data producing unit 102. Having received the transmission request for imaging path data, the path data producing unit 102 reads the header of a plurality of JPEG data 54 stored in HDD23 as an accumulated video data 56. Then, the path data producing unit 102 extracts position data 52 from the read header and produces path data which comprises a plurality of position data 52 ordered by the imaging time of the corresponding JPEG data 54.

The path data producing unit 102 sends the produced path data to the device communication unit 45. The device communication unit 45 sends the path data to the host communication unit 81 of the personal computer 2. The host communication unit 81 sends the received path data to the PC display control unit 104.

Having received the path data from the path data producing unit 102 of the ultra -small and wide-angle camera device 1, the PC display control unit 104 of the personal computer 2 reads the map data 103 from the HDD 74 and assigns each position data 52 of the received path data onto the map according to their relative latitude/longitude. As the result, the display data is produced. The PC display control unit 104 sends the produced display data to the LCD 72 of the personal computer 2. The LCD 72 of the personal computer 2 displays the map, on which the imaging path is assigned, on the map display screen.

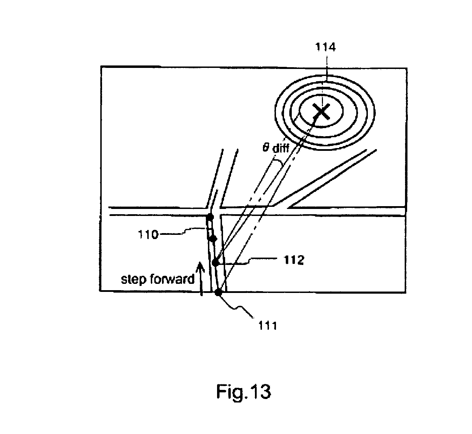

Fig. 13 is a diagram showing one example of a map display screen displayed on the LCD72 of the personal computer 2 in Fig.12. The map display screen of Fig. 13 displays, for example, a plurality of roads crossing at the center of the screen and mountains at the upper right corner of the screen. Also, the map display screen of Fig. 13 displays the imaging path 110 that starts from the lower center of the screen and heads towards the cross section at the center of the screen.

Furthermore, along the imaging path 110, the location of each position data 52 of the path data received from the path data producing unit 102 is shown as a black dot. On Fig. 13, the locations of four position data 52 are shown as black dots. On the map display screen of Fig. 13, the black dot location 111 at the very bottom is the location at which the first still image is shot, and black dot position 112 above it is the location at which the second still image is shot.

Receiving a predetermined input data from the input device 71 under the state when the LCD 72 displays the map display screen of Fig. 13, the PC display control unit 104 specifies the predetermined location on the displayed map as a subject position. For example, the PC control display unit 104 specifies the summit of the mountain (marked as X) in Fig. 13 as the subject position 114 as displayed on the screen.

The PC display control unit 104 sends the information of the specified subject position 114 to the host communication unit 81. The host communication unit 81 sends the information of the subject position 114 to the device communication unit 45 of the ultra -small and wide-angle camera device 1. The device communication unit 45 sends the information of subject position 114 to the displayed image producing unit 101. The displayed image producing unit 101 saves the received information of the subject position 114 to, for example, the HDD 23.

As in the process above, the information of subject position 114 is sent to the displayed image producing unit 101 of the ultra -small and wide-angle camera device 1. Regardless of this information feed, the display image producing unit 101 produces the display data in order to display a video.

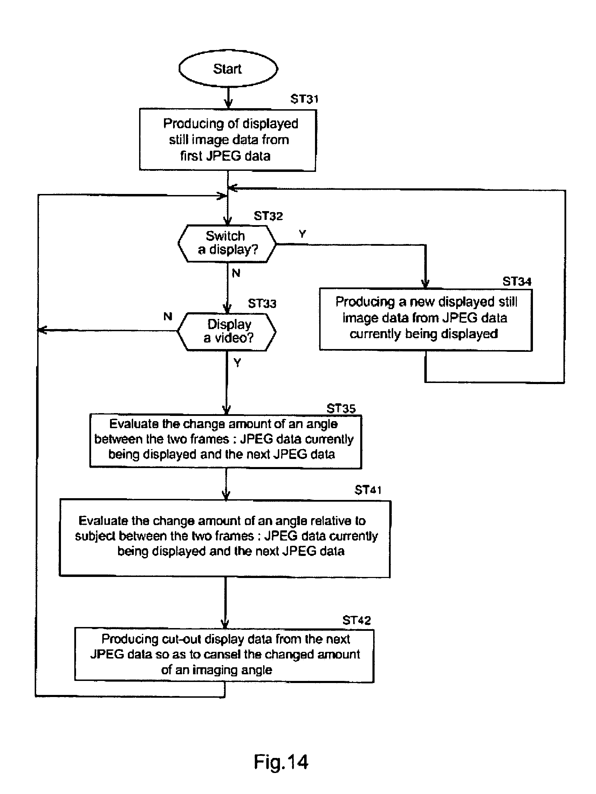

Fig. 14 is a flowchart showing the flow of the display operation during playback by the display image producing unit 101 in Fig. 12.

First, the display image producing unit 101 loads the elongated still image data that corresponds to the first JPEG data 54 of the accumulated video data 56 elongated by the JPEG engine 43, and from this loaded elongated still image it produces the first displayed still image data to be displayed on the display device in the form of a wide-angle screen (step ST31). The display image producing unit 101 sends the produced displayed- still image data to the device communication unit 45, and to the personal computer 2. Accordingly, the HDD 74 of the personal computer 2 stores, as received data 91, the displayed still image data to be displayed on a wide-angle screen.

When the displayed still image data is saved on the HDD 74 of the personal computer 2 as the received data 91, the PC display control unit 104 loads the displayed still image data from the HDD 74 of the personal computer 2, and sends it, as display data, to the large LCD 72 of the personal computer 2. Thereby, the large LCD 72 of the personal computer 2 displays the imaging display screen that includes a wide-angle screen on which the surrounding region of the circular image is filled in with a black color.

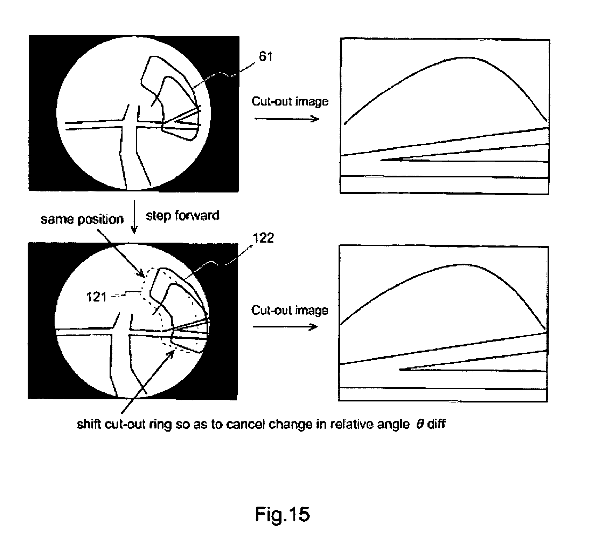

Fig. 15 is a diagram showing four screens that can be displayed on the large LCD 72 of the personal computer 2. The upper left screen in Fig. 15 is a wide-angle screen based on the first JPEG data 54 of the accumulated video data. The upper right screen on Fig. 15 is the cut-out screen processed with distortion correction and elongation after being cut-out, by the cut-out ring 61, from the image of the first JPEG data 54 of the accumulated video data. The bottom left screen on Fig. 15 is the wide-angle screen based on the second JPEG data 54 of the accumulated video data 56. The lower right screen in Fig. 15 is the cut-out screen processed with distortion correction and elongation after being cut-out, by cut-out ring 122, from the second JPEG data 54 of the accumulated data 56. Moreover, as it is clear from comparing the upper left wide-angle screen and the lower left wide-angle screen in Fig. 15, the imaging angle of fish-eye lens 15 does not change from the first wide-angle screen to the second wide-angle screen, respectively of Fig. 15. Only the imaging position changes due to forward movement. Due to this change in the imaging position, although the location of the subject, the mountain summit, does not change, the angle of the mountain changes slightly.

The PC display control unit 104 of the personal computer 2 adjusts the position and size of the cut-out ring 61 on the wide-angle screen, based on the input data produced by the input device 71 manipulated by a user of the video display system 4A. A user, for example, places the cut-out ring 61 at the right side of the wide-angle screen as shown on the top left wide-angle screen of Fig. 15 described below. The PC display control unit 104 produces a display command that cuts out the image inside of the cut-out ring 61 and displays it as a video, and sends it to the display image producing unit 101 of the ultra -small and wide-angle camera device 1.

Receiving the display command, the displayed image producing unit 101 specifies that there was a display switch command in step ST 32 on Fig. 14, cuts out a part of image of the currently displaying the first JPEG data 54 of the accumulated video data 56 according to the display switch command, and produces a new displayed still image data based on the cut-out image (step ST34).

The displayed image producing unit 101 sends the produced displayed still image data of the cut-out image to the personal computer 2. The PC display control unit 104 loads the received displayed still image data from the HDD 74, and displays the cut-out screen on the LCD 72 of the personal computer 2. Thereby, the LCD 72 of the personal computer 2 displays, for example, a cut-out screen at Fig. 15's upper right.

Thereafter, the display image producing unit 101 executes the production of the displayed still image data of the cut-out image from the second or later JPEG data 54 of the accumulated video data 56 (step ST 35, ST41, and ST42).

More specifically, the JPEG engine 43 loads, from the accumulated data 56 stored in HDD 23, the JPEG data 54 coming after the lastly elongated JPEG data 54 in the order of imaging. The JPEG engine 43 elongates the loaded JPEG data 54 and produces the elongated still image data.

After the elongated still image data is produced by the JPEG engine 43, the displayed image producing unit 101 first loads the header of the elongated JPEG data 54 from the HDD 23, and obtains the displacement data. With the displacement data, the displayed image producing unit 101 specifies the changed amount of the imaging angle during the time interval from the imaging timing of the previously cut-out JPEG data 54 to the imaging timing of the newly cut-out JPEG data 54 (step ST 35).

After the changed amount of the imaging angle has been specified, the displayed image producing unit 101 loads the header of the elongated JPEG data 54, the header of the previous JPEG data 54, and the subject position 114 information. Then, the displayed image producing unit 101 specifies the relative angle with respect to the subject (step ST41).

More specifically, as shown for example in Fig. 13, it is supposed that the imaging position associated with the previous JPEG data 54 is the black dot position 111, and the imaging position associated with the current JPEG data 54 is the black dot position 112. Then, the relative angle with respect to the subject position 114 changes by the amount "θ diff" in Fig. 13 during the time from the previous to the current imaging. The displayed image producing unit 101 specifies the subject position and the two imaging positions based on the information loaded from the HDD23, and calculates the changed amount "θ diff" in the relative angle based on the specified positions.

After specifying the changed amount of the imaging angle and that in the relative angle with respect to the subject, the display image producing unit 101 produces a cut-out ring 122 in replacement for the cut-out ring 61, cuts out the image within the region inside the cut-out ring 122 from the image of the elongated JPEG data 54, performs contour correction and deformation correction, and produces a displayed still image data for the cut-out screen (step ST 42.)

At this time, the displayed image producing unit 101 shifts the position of the cut-out ring 122 from the previous position of the cut-out ring 61 toward the direction that cancels the change in the imaging angle and by the same distance as the changed amount of the imaging angle. Then, it shifts the position of the cut-out ring 61 toward the direction that cancels the changed amount of the relative angle and by the same distance as the changed amount of the relative angle and produces a new cut-out ring 122. Finally, the displayed image producing unit 101 cuts out the image within the region inside the cut-out ring 122.

The wide-angle screen at the lower left in Fig.15 is the wide-angle screen displaying the second JPEG data 54 of the accumulated video data. The imaging angle of the fish-eye lens 15 of second wide-angle screen is no changed from that of the first imaging angle of the wide-angle screen on upper left in Fig. 15. However, as the imaging position moves forward, the imaging angle relative to the subject changes. In this case, the displayed image producing unit 101 shifts the position of the cut-out ring 122 toward the direction that cancels the changed amount of the relative angle and by the same distance as the changed amount of the relative angle. Finally, the displayed image producing unit 101 cuts out the image.

On the lower left wide-angle screen in Fig. 15, the cut-out ring 121 shown as a dotted line is at the same position as the cut-out ring 61 on the upper left wide-angle screen in Fig. 15. The subject, the mountain, shifts outward of the image by as much as the distance by which the imaging position moves from the black dot position 111 to the black dot position 112 closer to the mountain. The displayed image producing unit 101 shifts the cut-out ring 121 to the right side of the screen so as to cancel the changed amount "θ diff" in the relative angle originated from the above. Then, the image is cut-out from the cut-out ring 122 at the same position.

Consequently, the subject that moves in the contiguous circular images is roughly immobile within the contiguous cut-out images. As clearly seen in the comparison of the mountain position as a subject on the cut-out screen at the upper right in Fig. 15 with the mountain position as a subject on the cut-out screen at the lower right in Fig. 15, the movement of the subject due to the change in the relative angle is cancel in contiguous cut-out images. However, a scene of the outskirts of the mountain is changed.

Having produced the displayed still image data for the newly cut-out screen corresponding to the second or later images of the video through the sequence of above processes (steps ST35, ST41 and ST42), the displayed image producing unit 101 sends the produced displayed still image data to the personal computer 2. The PC display control unit 104 of the personal computer 2 loads displayed still image data of the new cut-out image for the second or later images in the received video from HDD74, and displays it on the LCD 72 of the personal computer 2. Thereby, the LCD 72 of the personal computer 2 displays a video of the cut-out screen in which the subject is contiguously imaged. The position of the subject was specified as the position 114 by a user. The LCD 72 displays, for an example, a cut-out screen at the upper right in Fig. 15 showing the subject at the center followed by a cut-out screen that shows the subject at the center on lower right in Fig. 15.

As stated above, in the ultra -small and wide-angle camera device 1 of this second embodiment, the CMOS imaging device 17 produces the shot still image data 51 which is a still image of rectangular shape that includes the circular image shot by the fish-eye lens 15. The JPEG engine 43 adds the imaging position information acquired by the GPS receiver 21 and the angle information detected by the gyro sensor 22 to the compressed still image data, compressed from the shot still image data imaged by the CMOS imaging device 17. As the result, the JPEG data 54 is produced. Furthermore, the displayed image producing unit 101 of the video display system 4A cuts out a part of the image of JPEG data 54 stored in HDD23 in the imaged order, and produces displayed still image data for the plurality of display images. The LCD 72 of the personal computer 2 sequentially displays a plurality of display images of a plurality of displayed still image data produced by the displayed image producing unit 101.

Especially in regards to the cutting out process of the second or later images, the displayed image producing unit 101 of the video image system 4A cuts out a part of the image in the following manner: Firstly, there is the change in the imaging angle between the previously cut-out still image and the to be cut-out image. This change is specified based on the information regarding the imaging angle or the changed amount which is attached to the JPEG data 54 to be cut-out or the previously cut-out JPEG data 54. Secondly, there is the change in the relative angle of the imaging positions of the previously cut-out still image and the still image to be cut-out image with respect to the subject. This change is specified based on the imaging position information indicating the imaging positions or their changed amount which is attached to the JPEG data 54 to be cut-out or the previously cut-out JPEG data 54. The displayed image producing unit 101 cuts out a part of the image as well as shifts the cut-out region so as to cancel the changed amounts in the two above mentioned angles, namely, the changed amount of the imaging angle and the changed amount of the relative angle of the imaging positions with respect to the subject.

Consequently, in the ultra -small and wide-angle camera device 1 of the second embodiment, the video display system 4A can play the video that continuously displays the predetermined subject without paying special attention to the desired subject, in other words, without maintaining the imaging angle towards the predetermined subject.

Furthermore, in the ultra -small and wide-angle camera device 1 of the second embodiment, the GPS receiver 21 receives a satellite radio wave, detecting ground position based on the absolute position information. In the video display system 4A, the PC display control unit 104 displays the screen on which the imaging positions of a plurality of JPEG data 54 stored in the HDD 23 of the ultra -small and wide-angle camera device 1 are mapped, on the LCD 72 of the personal computer 2. The PC display control unit 104 then specifies the subject position 114 based on the specified positions on the map displayed on the LCD 72 of the personal computer 2. Then, the displayed image producing unit 101 specifies the changed amount of the relative angle with respect to the subject according to the information of subject position 114 identified by the PC display control unit 104.

Consequently, by searching for the subject position 114 on the map on which the imaging path is mapped, the subject position 114 and changed amount in the angle relative to the subject can be easily identified.

Each of the embodiments described above is the preferable embodiment of the present invention. However, the invention is not limited to them, and various modifications can be made as long as the main sprit of the invention is maintained.

For example, on each of the embodiments mentioned above, the JPEG engine 43 attaches the angle information and the imaging position information to the still image data compressed from the shot still image data 51. The JPEG engine 43 may attach the angle information to the still image data compressed from the shot still image data 51. The JPEG engine 43 can also attach angle information and information other than imaging position information such as imaging time information to the compressed still image data compressed from the shot still image data 51.

On each of the embodiments mentioned above, the angle information included in the header of the JPEG data 54 is the changed amount of the imaging angle calculated by taking an integral of the acceleration detected by the gyro sensor 22 installed on the ultra -small and wide-angle camera device 1. Alternatively, the angle information may be information associated with an absolute imaging angle direction of the ultra -small and wide-angle camera device 1 based on the vertical direction or four cardinal points.

On each of the embodiments mentioned above, the imaging position information included in the header of the JPEG data 54 is the position detected by the GPS receiver 21 installed on the ultra -small and wide-angle camera device 1. The GPS receiver 21 detects the absolute ground position. Alternatively, the imaging position information can be the relative position information for the ultra -small and wide-angle camera device 1 such as the amount and direction of displacement of the imaging position between consecutive frames. Furthermore, in replacement for the GPS receiver 21, a receiver can be used which detects a position based on the absolute position information on the ground by receiving radio waves other than satellite radio waves such as radio waves from cellular phone base stations, airwaves, or wireless communication radio waves.

The display image producing unit 44 of the first embodiment shifts the cut-out region of the image specified by the cut-out ring 61 in such a way as to cancel the all changed amount of the imaging angle from the previously cut-out still image and the newly cut-out still image. The displayed image producing unit 101 for second embodiment shifts the cut-out region of the image, in such a way that the changed amount of the imaging angle between the previously cut-out still image and the newly cut-out still image, and the changed amount of the relative angle between the previously cut-out still image and the newly cut-out still image with respect to the subject are totally cancelled. Alternatively, for example, the displayed image producing units 44 and 101 may shift the cut-out region of the image in such a way that, 90% or so of the change in the imaging angle, or the changed amount of the relative angle with respect to the subject are cancel.

On each of the second embodiments mentioned above, the PC display control module 104 maps the imaging path received from the ultra -small and wide-angle camera device 1 onto the map on the display. Alternatively, for example, the PC display control unit 104 can map the imaging path on the single color screen such as a white background screen. Even in this modified example, the PC display control unit 104 may select an optional point on the single color screen as the subject location and identify the changed amount of the relative angle with respect to the subject. Thereby, the PC display control unit 104 easily identifies the location of the subject, and can identify the displacement amount of the relative angle of the subject.

On the second embodiment mentioned above, the PC display control unit 104 instructs the displayed image producing unit 101 of the ultra -small and wide-angle camera device 1 to produce the video included in the cut-out screen. Alternatively, for example, the PC display control unit 104 can request the displayed image producing unit 101 to produce one predetermined cut-out still image, and assign this image on a location on the map. Thereby, a user is able to confirm actual scenery of an arbitrary location on the map. Furthermore, the PC display control unit 104 can request production of a cut-out still image of the current position detected by the GPS receiver 21, and assign this image on a location on the map. Thereby, a user is able to easily recognize the current location. Moreover, the PC display control unit 104 may request production of the cut-out still image of a predetermined path on the map, and display the requested still image assigned to a location on the map. Thereby, a user can be guided along a predetermined path. The user is able to confirm actual scenery such as turning at the intersection while or before moving along this path. Furthermore, the PC display control unit 104 may request and display a plurality of cut-out still images viewed in a plurality of directions from a predetermined position. Thereby, multi-angle scenery at a predetermined position can be provided.

On each of the embodiments mentioned above, the ultra -small and wide-angle camera device 1 uses the fish-eye lens 15. In place of this ultra -small and wide-angle camera device 1, a ultra -small camera device with regular lens, or a ultra -small camera with telephoto lens can be used.

On each of the embodiments mentioned above, the video display systems 4 and 4A are configured so that the ultra -small and wide-angle camera device 1 is coupled to the personal computer 2 through the USB cable 3. Alternatively for example, the video display systems 4 and 4A can be configured as a single device such as personal computer 2 possessing a wide-angle camera device. Moreover, the ultra -small and wide-angle camera 1 and personal computer 2 of the video display systems 4 and 4A may be coupled with cables other than the USB cable 3 such as LAN cable, or wireless communication. Furthermore, a server device that relays communication data may be placed between the ultra -small and wide-angle camera device 1 and personal computer 2.

### [Industrial applicability]

The present invention can be favorably used for recording videos or for play backing them.

## Claims

1. A method for displaying a video comprising:
cutting out a portion of a first still image imaged by a wide-angle lens and producing a display data for a first display image base on the portion of the first still image;
specifying a changed amount in a imaging angle from the imaging timing for a previously cut-out still image to the imaging timing for the first still image whose portion is being cut-out, before cutting out a second or later still image imaged by the wide-angle lens;
and producing a display data for a second or later display image by cutting out a portion of the second or later still image as well as shifting a cut-out region of the second or later still image from that of the first still image so as to cancel the changed amount in the specified imaging angle.

2. A method for displaying a video comprises:
cutting out a portion of a first still image imaged by the wide-angle lens and producing a display data for a first display image capturing a desired subject;
specifying a changed amount in a imaging angle from the imaging timing for a previously cut-out still image to the imaging timing for the first still image whose portion is being cut-out, and a changed amount in a relative angle between the imaging position of the previously cut-out still image and the first still image whose portion is being cut-out with respect to the position of the subject, before cutting out a second or later still image imaged by the wide-angle lens; and
producing a display data for a second or later display image by cutting out a portion of the second or later still image as well as shifting a cut-out region of the second or later still image from that of the first still image so as to cancel the changed amounts in the specified imaging angle and the relative angle.

3. A video displaying system comprising:
a memory means that stores a plurality of saved still image formed with adding angle information specifying an imaging angle or a changed amount of the imaging angle, to each of still image data imaged continuously by the wide-angle lens;
a cut-out displayed image producing means that cuts out a portion of the saved still image stored by the memory means in the order of imaging and produces a display data for a plurality of display images, and
a display means that displays a plurality of display images in order based on a plurality of display data produced by the cut-out displayed image producing means, wherein
the cut-out displayed image producing means cuts out a portion of the still image by shifting a cut-out region of the still image so as to cancel the changed amount of the imaging angles between the still image whose portion is to be cut-out and the previously cut-out still image during cutting out a second or later still image, and the changed amount of the imaging angles is specified based on the change in the imaging angles between the saved still image data whose portion is to be cut-out and the previously cut-out saved still image data and angle information indicating the changed amount.

4. A video displaying system comprising:
angle information that specifies an imaging angle or a changed amount of the imaging angle added to each of plurality of still image data continuously imaged by using a wide angle lens;
a memory means that stores a plurality of saved still image data each of which includes the imaged position and imaged position information indicating the amount of a positional change;
a cut-out displayed image producing means that cuts out a portion of an image of the saved still image data stored by the memory means in the order and produces a display data for a plurality of display images displaying a predetermined subject; and
a display means that displays a plurality of display images in order based on a plurality of display data produced by the cut-out displayed image producing means, wherein
the cut-out displayed image producing means cuts out a portion of the still image as well as shifts a cut-out region of the still image so as to cancel a changed amount of imaging angles between the still image data whose portion is to be cut-out and the previously cut-out still image data and a changed amount of a relative angle of the position of imaging the previously cut-out still image and the position of the still image whose portion is to be cut-out with respect to a subject to be imaged, during cutting out a second or later still image, wherein
the changed amount of the imaging angles is specified based on angle information indicating the imaging angles and the changed amount, which are added to the saved still image data whose portion is to be cut-out and the previously cut-out saved still image data, and the changed amount of the relative angle is specified based on imaged position information indicating the imaged position and the changed amount, which are added to the saved still image data whose portion is to be cut-out and the previously cut-out saved still image data.

5. The video displaying system according to claim 4 further comprising:
a imaging path display instruction means that instructs the display means to display a screen on which a plurality of imaging positions of the saved still image data stored in the memory means are mapped, and
a subject position specifying means that specifies a subject position based on the plurality of imaging positions mapped onto and displayed on the display means, wherein the cut-out displayed image producing means specifies the changed amount of the relative angle with respect to the subject based on the subject position specified by the subject position specifying means.

6. The video displaying system according to claim 4 further comprising:
a imaging path display instruction means that instructs the display means to display a screen on which imaging positions of a plurality of the saved still image data stored in the memory means are mapped;
a subject position specifying means that specifies the subject position based on the specified positions on the map displayed on the display means, wherein
the cut-out displayed image producing means specifies the change amount in the relative angle with respect to the subject based on the subject position specified by the subject position specifying means.

7. A wide-angle video imaging device comprising:
a wide-angle lens;
an imaging means that produces a shot still image data associated with a rectangular image including a circular image imaged by the wide-angle lens;
an adding means that produces a saved still image data by adding angle information indicating an imaging angle or a changed amount of the imaging angle to the shot still image data imaged by the imaging means or a compressed still image data compressed based on the shot still image data; and
a memory means that stores a plurality of the saved still image data produced by the adding means.

8. The wide-angle video imaging device according to the claim 7 further comprising an attitude change detecting means that detects a change in the attitude thereof, wherein the adding means adds the changed amount in the attitude detected by the attitude change detecting means as angle information.

9. A wide-angle video imaging device comprising:
a wide-angle lens;
an imaging means that produces a shot still image data associated with a rectangular image including a circular image imaged by the wide-angle lens;
angle information that indicates an imaging angle or a changed amount of the imaging angle added to an shot still image data imaged by the imaging means or a compressed still image data compressed based on the shot still image data, and
an adding means that produces a saved still image data by adding imaged position information indicating an imaged position or an amount of a positional change to the saved still image data; and
a memory means that stores a plurality of the saved still image data produced by the adding means.

10. The wide-angle video imaging device according to claim 9 further comprising:
an attitude detecting means that detects a change in the attitude thereof, and
a position detecting means that detects a position thereof, wherein the adding means may add the change amount of the attitude detected by the attitude change detecting means and the position thereof detected by the position detecting means as an angle information and imaged position information.

11. The wide-angle video imaging device according to claim 10 , wherein the position detecting means detects an absolute ground position by receiving radio waves such as satellite radio waves, radio waves from cellular phone base stations, airwaves, or wireless communication radio waves.
